# FASCICULE DE BREVET EUROPEEN

(11) **EP 0 901 934 B1**
(45) Date de publication et mention de la délivrance du brevet: **27.12.2000**
(21) Numéro de dépôt: 98470021.1
(22) Date de dépôt: 04.09.1998
(51) Int. Cl.: B60N 2/00, B60N 2/06

(54) **Glissière pour un siège amovible de véhicule automobile**
Gleitschiene für einen herausnehmbaren Fahrzeugsitz
Slide for a dismountable vehicle seat

(30) Priorité: 12.09.1997 FR 9711528
(43) Date de publication de la demande: 17.03.1999
(73) Titulaire: BERTRAND FAURE EQUIPEMENTS S.A., 92641 Boulogne Cedex (FR)
(72) Inventeur: Moradell, Pierre, 57000 Metz (FR); Folliot, Dominique, 57000 Metz (FR); Bouhelier, Jean-Luc, 57000 Metz (FR)
(74) Mandataire: Ballot, Paul Denis Jacques

(56) Documents cités:
- FR-A- 2 702 717
- US-A- 4 949 931
- US-A- 5 280 987
- US-A- 5 337 979

## Description

La présente invention concerne une glissière pour un siège amovible de véhicule automobile selon le préambule de la revendication 1. Une telle glissière connue est décrite dans le document US-A-4.949.931. Dans les véhicules comportant de tels sièges, tels que les véhicules de type monospace, ces sièges sont classiquement maintenus sur le plancher par des systèmes d'ancrage déverrouillables permettant un retrait rapide du siège, sans besoin d'outils.

On connaît ainsi deux types de systèmes d'ancrage utilisant, au niveau de chaque pied du siège, un crochet articulé sur le pied et venant en prise avec un élément d'ancrage solidaire du plancher. Selon un premier type, tel que décrit dans le document FR-A-2556946, cet élément d'ancrage est une barre ou un anneau fixé au plancher. Selon un deuxième type, tel que décrit dans le document FR-A-2684934, le crochet s'ancre sur le bord d'une lumière découpée dans le plancher et dans laquelle le crochet pénètre. Avec ces systèmes, la position des sièges est déterminée par la position des points d'ancrage sur le plancher. Ce n'est qu'en prévoyant une multiplicité de points d'ancrage que l'on peut placer les sièges dans diverses positions, le choix de ces positions restant toutefois limité.

Pour offrir plus de souplesse dans le positionnement des sièges, il a déjà été prévu de monter ces sièges sur glissières. Le document FR-A-2702717 montre un véhicule dont le plancher comporte une pluralité de glissières longitudinales sur lesquelles les sièges amovibles peuvent être montés et qui permettent d'adapter la position des sièges par coulissement le long de ces glissières. A cette fin, les glissières comportent un rail fixe, solidaire du plancher, et des rainures en V sont ménagées dans les flancs latéraux du rail. Des coulisseaux en forment de U chevauchent le rail et comportent des éléments de glissement en plastique qui sont guidés dans les rainures en V du rail pour assurer un glissement silencieux du coulisseau sur le dit rail. Les coulisseaux sont pourvus à leurs extrémités d'anneaux rapportés sur lesquels les pieds des sièges se verrouillent par des systèmes d'ancrage à crochets du premier type mentionné ci-dessus. Des moyens de verrouillage sont par ailleurs prévus pour verrouiller le coulisseau en position longitudinale par rapport à la partie fixe de la glissière. Un intérêt particulier de ce système est de permettre un réglage en position longitudinale du siège sur toute la longueur du rail, c'est à dire sur une grande distance, pouvant par exemple aller des sièges avant jusqu'à l'extrémité arrière du véhicule.

Un système de glissière, permettant aussi d'obtenir une grande course de réglage, est décrit dans le document US-A-4949931. Dans ce système, l'armature du siège est fixée, de chaque côté, sur un coulisseau pourvu de galets qui roulent dans des chemins de guidage formés par les ailes repliées d'un profilé ayant une section de forme générale en U, ouvert vers le haut et sensiblement symétrique par rapport à un plan médian longitudinal vertical, ce profilé constituant la partie fixe de la glissière. Tous les efforts d'arrachement du siège transitent par les fixations de l'armature sur le coulisseau et de là aux galets puis à la partie fixe de la glissière.

La présente invention vise à fournir un système de glissières pour sièges amovibles, notamment adapté pour recevoir aussi des sièges pourvus de systèmes d'ancrage du deuxième type mentionné ci-dessus. Elle vise aussi à améliorer la sécurité en assurant une grande résistance à l'arrachement de ces sièges en cas d'accident.

Avec ces objectifs en vue, l'invention a pour objet une glissière pour un siège amovible de véhicule automobile, comportant un profilé femelle, de section en forme de U ouvert vers le haut et sensiblement symétrique par rapport à un plan médian longitudinal vertical, solidaire du plancher du véhicule, et un coulisseau monté coulissant entre les ailes du profilé femelle et pourvu de moyens d'ancrages sur lesquels le siège peut être fixé, les ailes du U du profilé femelle étant conformées de manière à constituer des chemins de guidage pour des éléments de guidage situés latéralement et symétriquement de part et d'autre du coulisseau, les dits éléments de guidage sont reliés par des goupilles transversales qui sont solidaires du coulisseau caractérisée en ce que les dites goupilles transversales (5) constituent les dits moyens d'ancrage pour relier le siège au coulisseau de manière désolidarisable.

Le siège est donc relié le plus directement possible aux éléments de guidage. Les efforts de soulèvement du siège sont transmis des crochets de verrouillage du siège aux goupilles et de là directement aux éléments de guidage et au profilé femelle solidaire du plancher. En cas d'accident ou de choc violent sur le véhicule, le flux d'efforts d'arrachement du siège passe donc par le chemin le plus direct entre le siège et le plancher du véhicule, et est réparti de manière sensiblement égale des deux côtés de la glissière, du fait de la symétrie longitudinale de celle-ci.

Comparativement, dans le système du document US-A-4949931, le chemin de transmission du flux d'efforts est sensiblement plus long. De même, dans le système connu décrit précédemment dans le document FR-A-2702717, ce flux d'effort passe du siège à l'anneau situé à l'extrémité du coulisseau, puis est transmis de l'anneau au coulisseau par les moyens de fixation de cet anneau sur le coulisseau, et du coulisseau à la partie fixe de la glissière par l'intermédiaire des éléments de guidage situés entre le coulisseau et la partie fixe. Le flux d'effort emprunte donc aussi un chemin nettement plus long, passant par plusieurs pièces, avec un risque accru de rupture ou de déformation de ces pièces.

Selon une disposition préférentielle, le coulisseau comporte deux paires d'éléments de guidages, glissants dans les chemins de guidage formés par des rainures aménagées dans les ailes du profilé en U de la glissière. Au lieu d'être des éléments glissants dans les rainures du profilé femelle, les éléments de guidage pourraient aussi être des éléments roulants, comme les galets du document US-A-4949931.

Selon une autre disposition, chaque paire d'éléments de guidage comporte au moins une goupille servant d'ancrage pour un pied du siège. Selon cette disposition, les éléments de guidage sont localisés au niveau de chaque pied et ne s'étendent donc pas sur toute la longueur du coulisseau. On obtient ainsi un gain en coût et en poids sans réduire la résistance à l'arrachement puisque, comme indiqué précédemment, les flux d'effort sont transmis par les goupilles de liaison des éléments de guidage, et donc pratiquement dans une zone localisée au voisinage de ces goupilles.

Selon une autre disposition encore, le coulisseau comporte deux parois latérales sur lesquelles les éléments de guidage sont maintenus par les dites goupilles qui traversent les dites parois latérales. Préférentiellement, le coulisseau est alors formé d'un profilé de section en forme de U dont les ailes constituent les dites parois latérales, et dont le fond, situé vers le haut, comporte des orifices ménagés au niveau des dites goupilles, pour permettre le passage des pieds du siège. Ce profilé sert essentiellement à maintenir l'espacement requis entre les deux paires d'éléments de guidage et les goupilles respectives sur lesquelles s'ancrent les deux pieds situés d'un même côté du siège. Cette fonction ne nécessiterait pas forcément l'utilisation d'un tel profilé. Toutefois, ce profilé peut être avantageusement utilisé pour y monter des moyens de verrouillage en translation du coulisseau par rapport au profilé femelle fixe. On notera également que ce profilé peut être un profilé en U ordinaire, sans profil particulier destiné à assurer le guidage par rapport au profilé femelle, et donc peu coûteux, puisque les éléments de guidage sont rapportés sur ce profilé. De plus, les efforts d'appui ou d'arrachement du siège ne transitent pas par ce profilé dont la résistance mécanique n'a pas particulièrement besoin d'être élevée puisqu'elle n'influe pas sur la résistance à l'arrachement du siège.

Selon une autre disposition préférentielle, une entretoise est placée autour de la goupille, entre les éléments de guidage. Cette entretoise tubulaire maintient l'écartement requis entre les éléments de guidage et augmente la section soumise aux efforts de flexion et de cisaillement exercés par les pieds du siège et leurs crochets de verrouillage.

Préférentiellement, les extrémités de l'entretoise sont ajustées dans des alésages réalisés dans les parois latérales du coulisseau, et de plus chaque élément de guidage comporte un bossage inséré dans une découpe de forme correspondante réalisée dans la paroi latérale du coulisseau. Ainsi, les parois latérales participent également à la transmission des flux d'efforts, via les extrémités des dites entretoises et les dits bossages.

Les éléments de guidage sont préférentiellement pourvus de patins de coulissement rapportés, en matière présentant un bon coefficient de frottement, pour faciliter le coulissement en usage normal. Ces patins ne débordent que faiblement par rapport aux éléments de guidage, qui sont eux réalisés en acier ou autre métal ayant une grande résistance mécanique. Ainsi, en cas d'efforts importants excédant les capacités des patins de frottement, ces efforts sont transmis directement par les éléments de guidage aux profilés femelles, sans que des déformations ou jeux notables n'apparaissent dans la liaison entre coulisseau et profilé femelle.

D'autres caractéristiques et avantages apparaîtront dans la description qui va être faite uniquement à titre d'exemple d'une glissière conforme à l'invention.

On se reportera aux dessins annexés dans lesquels :
- la figure 1 est une vue en perspective de la glissière, le coulisseau étant représenté sorti du profilé femelle,
- la figure 2 est une section transversale dans le plan défini par la ligne II-II de la figure 1,
- la figure 3 est une section transversale dans le plan défini par la ligne III-III de la figure 1,
- la figure 4 est une vue partielle en coupe longitudinale, montrant de manière simplifiée l'ancrage du siège sur le coulisseau.

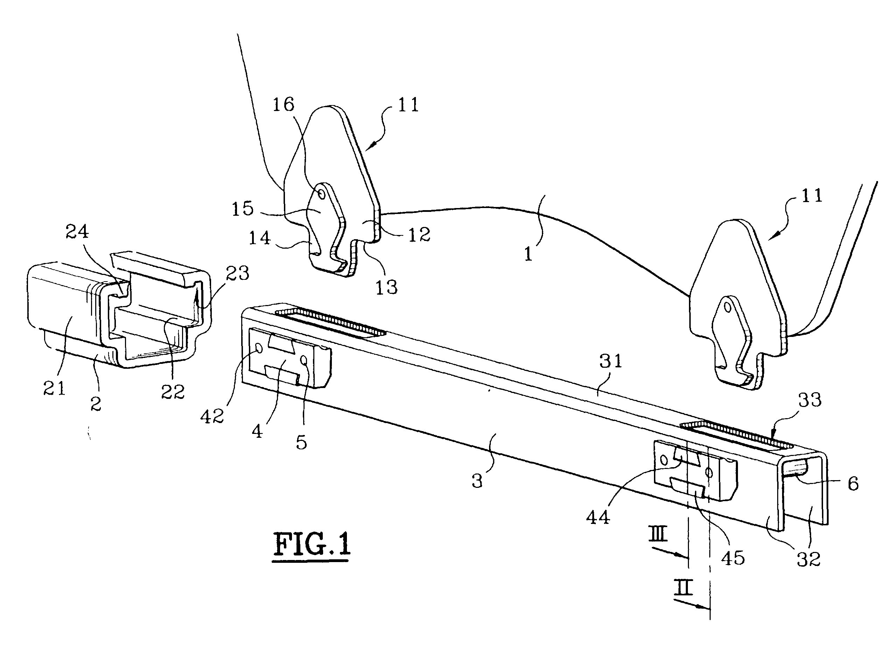

Sur le dessin de la figure 1, on a représenté schématiquement la partie inférieure latérale de l'armature du siège 1, portant les pieds 11. Chaque pied est formé d'une plaque 12 fixée sur l'armature et présentant un bord inférieur d'appui 13 et une languette de centrage 14 s'étendant vers le bas au-delà du bord d'appui.

Le pied comporte par ailleurs un mécanisme d'ancrage formé, dans l'exemple présenté, d'un crochet double 15 monté pivotant sur la plaque 12 autour d'une articulation 16. Il comporte également des moyens, non représentés, de commande du pivotement et de verrouillage en position du crochet 15. Pour plus de détails sur de tels moyens de commande et de verrouillage, on pourra notamment se reporter au document FR-A-2684934 déjà cité. On notera que ni le mode de réalisation du pied montré sur les dessins annexés, ni ceux montrés dans le document cité ci dessus, ne sont limitatifs des applications de la présente invention, tout système de fixation et d'ancrage pouvant être utilisé pour fixer un siège sur une glissière conforme à l'invention, dès lors que ce système comporte un crochet adapté pour coopérer avec les moyens d'ancrage de la glissière, comme on le verra par la suite.

La glissière comporte un profilé femelle 2 solidarisé au plancher du véhicule, non représenté, et un profilé mâle 3 formant coulisseau et pourvu d'éléments de guidage 4 pour assurer son coulissement par rapport au profilé femelle. Ce profilé femelle peut par exemple s'étendre sur une grande partie du plancher, dans la direction longitudinale du véhicule, pour permettre de placer le siège en de nombreuses positions le long de ce profilé, et préférentiellement il sera placé de manière à ne pas dépasser au dessus du plancher.

Le profilé femelle 2, par exemple un profilé en alliage métallique moulé ou extrudé, a une section de forme générale en U ouvert vers le haut, présentant deux ailes 21 conformées de manière à constituer des rainures de guidage pour les éléments de guidage 4, ces rainures présentant un bord inférieur 22 et un bord supérieur 23 qui a, en section transversale, une forme trapézoïdale obtenue par un retour d'aile en crochet 24 formé à partir du bord supérieur des ailes 21 du profilé femelle.

Le profilé mâle 3 est constitué d'un profilé en U, par exemple en tôle d'acier plié, comportant un fond 31 situé vers le haut, et deux ailes 32 planes et parallèles. Des orifices 33 sont découpées dans le fond 31 du profilé mâle, de dimensions suffisantes pour permettre le passage des pieds 11 du siège, et avec un écartement correspondant à celui des dits pieds. Contrairement au profilé femelle 2, le profilé mâle 3 a une longueur relativement faible, simplement suffisante pour pouvoir recevoir les deux pieds du siège, comme on le verra par la suite.

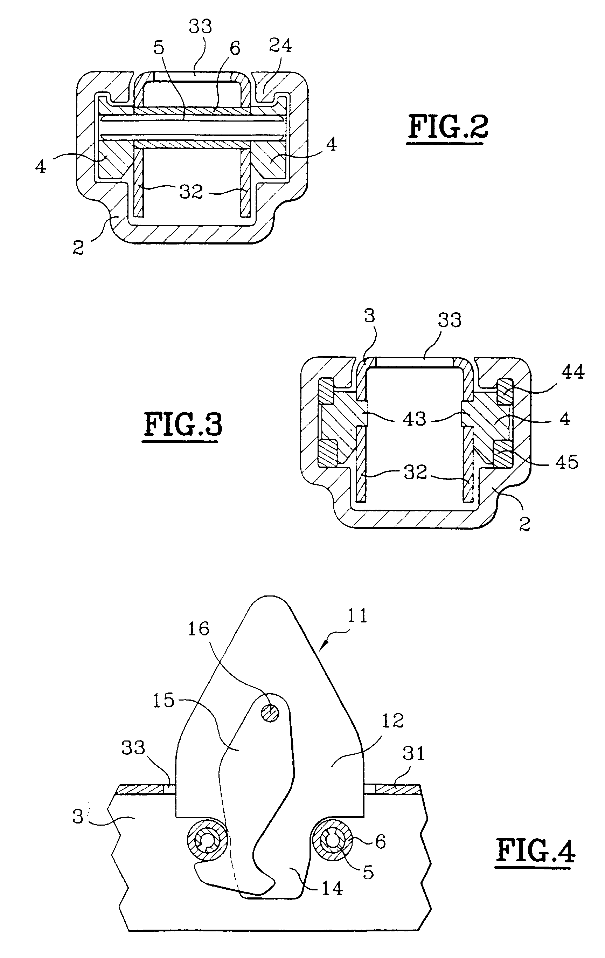

Les éléments de guidage 4 sont placés de chaque côté du profilé mâle au niveau de chacun des orifices 33, contre les parois 32 formées par les ailes du U. Les éléments de guidage ont, en section transversale, une forme correspondante à celle des rainures du profilé femelle, et ont une longueur, dans la direction longitudinale, voisine de celle des orifices 33. Comme on le voit figure 2, des goupilles, par exemple des goupilles fendues 5, relient les deux éléments de guidages 4 situés de part et d'autre du profilé mâle 3, en passant à travers les parois 31 de ce profilé et en ayant leurs extrémités insérées en force dans des alésages 42 réalisés dans les éléments de guidage. Des entretoises tubulaires 6 sont placées sur les goupilles 5, les extrémités des ces entretoises étant en butée contre les éléments de guidage 4 et insérées dans des alésages de diamètre correspondant réalisés dans les parois 32 du profilé mâle.

Les deux éléments de guidage 4 d'une même paire sont reliés comme indiqué ci-dessus par deux ensembles de goupille et entretoise, la distance entre les entretoises étant sensiblement égale à la largeur de la languette 14 du pied du siège, comme on le voit figure 4, de manière à assurer le centrage du pied par rapport aux goupilles et aux éléments de guidage.

Ces éléments de guidage comportent de plus un bossage circulaire 43, situé en position médiane entre les deux goupilles, inséré dans un alésage correspondant réalisé dans les parois latérales 32 du profilé mâle, comme on le voit figure 3. Des patins de glissement 44, 45, sont par ailleurs placés dans des usinages en forme de queue d'aronde réalisés respectivement sur les bords supérieurs et inférieurs des éléments de guidage. Ces patins dépassent légèrement des surfaces externes des éléments de guidage et sont seuls en contact avec les bords 22 et 23 des rainures du profilé femelle 2 lors de l'utilisation courante de la glissière. Ce n'est qu'en cas d'efforts importants que la partie métallique des éléments de guidage risque d'être amené au contact du profilé femelle.

Comme on le voit figure 4, le maintien du siège sur le coulisseau est assuré par l'appui des bords 13 des pieds sur les entretoises 6, par le centrage de la languette 14 entre les entretoises, et par l'engagement du crochet 15 sous l'une ou l'autre des entretoises, le crochet étant maintenu dans cette position par des moyens de verrouillage de type connu en soi, non représentés. La glissière comporte également des moyens de verrouillage en translation du profilé mâle par rapport au profilé femelle, non représentés car sortant du cadre de la présente invention.

L'invention n'est pas limité au mode de réalisation décrit précédemment uniquement à titre d'exemple. En particulier, la disposition relative des éléments de guidages et des goupilles et entretoises par rapport aux orifices 33 pourra être modifiée de manière à permettre l'ancrage de pieds réalisés de manière différente de celle représentée, par exemple des pieds comportant une fourche ouverte vers le bas et pouvant s'engager à cheval sur une goupille ou entretoise, et comportant également un crochet pivotant s'engageant sous cette goupille.

Egalement, les goupilles de liaison pourront être réalisées d'une pièce avec l'un des éléments de guidage et s'engager, en passant à travers les parois du coulisseau, dans des alésages de l'autre élément de guidage.

Les éléments de guidage pourraient également s'étendre sur une longueur plus importante, supérieure à la distance entre les deux pieds du siège, et être reliés par exemple par une seule goupille au niveau de chaque pied.

## Revendications

1. Glissière pour un siège amovible de véhicule automobile, comportant un profilé femelle (2) de section en forme de U ouvert ver- le haut et sensiblement symétrique par rapport à un plan médian longitudinal vertical, solidaire du plancher du véhicule, et un coulisseau (3) monté coulissant entre les ailes du profilé femelle et pourvu de moyens d'ancrages sur lesquels le siège (1) peut être fixé, les ailes (21) du U du profilé femelle étant conformées de manière à constituer des chemins de guidage pour des éléments de guidage (4) situés latéralement et symétriquement de part et d'autre du coulisseau, les dits éléments de guidage sont reliés par des goupilles transversales (5) qui sont solidaires du coulisseau caractérisée en ce que les dites goupilles transversales (5) constituent les dits moyens d'ancrage pour relier le siège au coulisseau de manière désolidarisable.

2. Glissière selon la revendication 1, caractérisée en ce qu'elle comporte deux paires d'éléments de guidage (4), chaque paire comportant au moins une goupille (5) servant d'ancrage pour un pied (11) du siège.

3. Glissière selon l'une quelconque des revendications 1 ou 2, caractérisée en ce que le coulisseau comporte deux parois latérales (32) sur lesquelles les éléments de guidage (4) sont maintenus par les dites goupilles (5) qui traversent les dites parois latérales.

4. Glissière selon la revendication 3, caractérisée en ce que une entretoise (6) est placée autour de la goupille (5), entre les éléments de guidage (4).

5. Glissière selon la revendication 4, caractérisée en ce que les extrémités de l'entretoise (6) sont ajustées dans des alésages réalisés dans les parois latérales (32) du coulisseau.

6. Glissière selon la revendication 3, caractérisée en ce que chaque élément de guidage (4) comporte un bossage (43) inséré dans une découpe de forme correspondante réalisée dans la paroi latérale (32) du coulisseau.

7. Glissière selon la revendication 1, caractérisée en ce que les éléments de guidage sont montés glissants dans des rainures aménagées dans les ailes du profilé femelle.

8. Glissière selon la revendication 7, caractérisée en ce que les éléments de guidage (4) sont pourvus de patins de coulissement (44, 45) rapportés.

9. Glissière selon la revendication 2, caractérisée en ce que les deux éléments de guidage (4) d'une même paire sont reliés par deux goupilles (5) ménageant entre elles, dans la direction longitudinale, un espace adapté pour recevoir une languette de centrage (14) du pied du siège.

10. Glissière selon la revendication 3, caractérisée en ce que le coulisseau est formé d'un profilé (3) de section en forme de U dont les ailes constituent les dites parois latérales (32), et dont le fond (31), situé vers le haut, comporte des orifices (33) ménagés au niveau des dites goupilles, pour permettre le passage des pieds (11) du siège.

## Patentansprüche

1. Gleitschiene für einen abnehmbaren Kraftfahrzeugsitz, die ein fest mit dem Boden des Fahrzeugs verbundenes Aufnahme-Profilteil (2) mit einem U-förmigen, nach oben offenen und in Bezug auf eine senkrechte Längs-Mittelebene im wesentlichen symmetrischen Querschnitt und einen Schlitten (3) aufweist, der gleitend zwischen den Schenkeln des Aufnahme-Profilteils montiert und mit Verankerungsmitteln versehen ist, an denen der Sitz (1) befestigt werden kann, wobei die Schenkel (21) des U des Aufnahme-Profilteils so ausgebildet sind, daß sie Führungsbahnen für Führungselemente (4) bilden, die seitlich zu beiden Seiten des und symmetrisch zum Schlitten angeordnet sind, wobei die Führungselemente über Querstifte (5) verbunden sind, die fest mit dem Schlitten verbunden sind, dadurch gekennzeichnet, daß die Querstifte (5) die Verankerungsmittel zur lösbaren Verbindung des Sitzes mit dem Schlitten bilden.

2. Gleitschiene nach Anspruch 1, dadurch gekennzeichnet, daß sie zwei Paare von Führungselementen (4) aufweist, wobei jedes Paar mindestens einen Stift (5) aufweist, der als Verankerung für einen Fuß (11) des Sitzes dient.

3. Gleitschiene nach einem beliebigen der Ansprüche 1 oder 2, dadurch gekennzeichnet, daß der Schlitten zwei Seitenwände (32) aufweist, an denen die Führungselemente (4) durch die Stifte (5) gehalten werden, die diese Seitenwände durchqueren.

4. Gleitschiene nach Anspruch 3, dadurch gekennzeichnet, daß zwischen den Führungselementen (4) eine Abstandshülse (6) um den Stift (5) herum angeordnet ist.

5. Gleitschiene nach Anspruch 4, dadurch gekennzeichnet, daß die Enden der Abstandshülse (6) in Bohrungen eingepaßt sind, die in den Seitenwänden (32) des Schlittens ausgebildet sind.

6. Gleitschiene nach Anspruch 3, dadurch gekennzeichnet, daß jedes Führungselement (4) einen Vorsprung (43) aufweist, der in einen Ausschnitt entsprechender Form eingefügt ist, der in der Seitenwand (32) des Schlittens ausgebildet ist.

7. Gleitschiene nach Anspruch 1, dadurch gekennzeichnet, daß die Führungselemente in Nuten gleitend eingebaut sind, die in den Schenkeln des Aufnahme-Profilteils ausgespart sind.

8. Gleitschiene nach Anspruch 7, dadurch gekennzeichnet, daß die Führungselemente (4) mit angesetzten Gleitschuhen (44, 45) versehen sind.

9. Gleitschiene nach Anspruch 2, dadurch gekennzeichnet, daß die beiden Führungselemente (4) eines gleichen Paars über zwei Stifte (5) verbunden sind, die zwischen sich in Längsrichtung einen Raum aussparen, der geeignet ist, eine Zentrierzunge (14) des Fußes des Sitzes aufzunehmen.

10. Gleitschiene nach Anspruch 3, dadurch gekennzeichnet, daß der Schlitten von einem Profilteil (3) mit U-förmigem Querschnitt gebildet wird, dessen Schenkel die Seitenwände (32) bilden und dessen nach oben gerichteter Boden (31) Öffnungen (33) aufweist, die in Höhe der Stifte ausgespart sind, um den Durchlaß der Füße (11) des Sitzes zu ermöglichen.

## Claims

1. A slide for a removable vehicle seat, comprising a U-shaped female section (2) which is upwardly open and substantially symmetrical relative to a vertical, longitudinal, central plane and integral with the floor of the vehicle, and a guide rail (3) mounted so as to slide between the sides of the female section and provided with fixing means to which the seat (1) can be fixed, the sides (21) of the U of the female section being shaped so as to form guide channels for guide members (4) located laterally and symmetrically on either side of the guide rail, the said guide members being connected by transverse pins (5) integral with the guide rail, characterised in that the transverse pins (5) form the said fixing means for detachably connecting the seat to the guide rail.

2. A slide according to claim 1, characterised in that it comprises two pairs of guide members (4), each pair comprising at least one pin (5) acting as a fixing for a foot (11) of the seat.

3. A slide according to either one of claims 1 and 2, characterised in that the guide rail comprises two lateral walls (32) on which the guide members (4) are held by the said pins (5) extending through the said lateral walls.

4. A slide according to claim 3, characterised in that a crosspiece (6) is placed around the pin (5) between the guide members (4).

5. A slide according to claim 4, characterised in that the ends of the crosspiece (6) are fitted into bores formed in the lateral walls (32) of the guide rail.

6. A slide according to claim 3, characterised in that each guide member (4) comprises a projection (43) inserted into a correspondingly shaped cut-out formed in the lateral wall (32) of the guide rail.

7. A slide according to claim I, characterised in that the guide members are mounted so as to slide in grooves formed in the sides of the female section.

8. A slide according to claim 7, characterised in that the guide members (4) are provided with inserted sliding blocks (44, 45).

9. A slide according to claim 2, characterised in that the two guide members (4) of a same pair are connected by two pins (5) forming between one another, in the longitudinal direction, a space adapted for receiving a centering tongue (14) of the foot of the seat.

10. A slide according to claim 3, characterised in that the guide rail is formed from a U-shaped section (3), the sides of which form the said lateral walls (32), and the base (31) of which is arranged on top and comprises openings (33) arranged level with the said pins to allow the passage of the feet (11) of the seat.
